# EUROPEAN PATENT APPLICATION

(11) **EP 4 407 170 A1**
(43) Date of publication of application: **31.07.2024**
(21) Application number: 24153726.5
(22) Date of filing: 24.01.2024
(51) Int. Cl.: F02C 7/141, F28D 7/00, F28D 21/00

(54) **LATTICE HEAT EXCHANGER**

(30) Priority: 26.01.2023 US 202318101615
(71) Applicant: RTX Corporation, Farmington, CT 06032 (US)
(72) Inventor: Gerlach, David W., Ellington, 06029 (US)
(74) Representative: Schmitt-Nilson Schraud Waibel Wohlfrom Patentanwälte Partnerschaft mbB

(57) **Abstract**

A lattice heat exchanger structural support including a hollow lattice structure having hollow tubes configured to flow a first working fluid internally through the lattice structure, the hollow lattice structure comprising open cell structure configured to flow a second working fluid through the lattice externally of the hollow tubes; a first structure attached to the hollow lattice structure; and a second structure attached to the hollow lattice structure, wherein the hollow lattice structure provides structural support to the first structure and the second structure.

## Description

The disclosure relates to a modification of hollow lattice structures to be co-optimized for heat transfer and external load bearing structural applications. Particularly the modification can include strategic placement of the hollow lattice structures to harness available heat transfer working fluid and waste heat recovery.

Traditionally heat exchangers in gas turbine engines have been designed to hold pressure of the working fluid and to react to thermal stresses. However, heat exchangers need to be located in regions of the gas turbine engine that also require structural support. Thus, the heat exchanger as well as a load bearing structural support are both needed to perform two independent functions.

What is needed is a heat exchanger that can perform both the transfer of thermal energy as well as provide architectural structural support for the gas turbine engine.

In accordance with the present disclosure, there is provided a lattice heat exchanger structural support comprising a hollow lattice structure having hollow tubes configured to flow a first working fluid internally through the lattice structure, the hollow lattice structure comprising open cell structure configured to flow a second working fluid through the lattice externally of the hollow tubes; a first structure attached to the hollow lattice structure; and a second structure attached to the hollow lattice structure, wherein the hollow lattice structure provides structural support to the first structure and the second structure.

Particular embodiments may include at least one, or a plurality of, the following optional features. These features may be provided separately from each other, or in combination with each other, unless specified otherwise.

A further embodiment of any of the foregoing embodiments may additionally and/or alternatively include the hollow lattice structure is co-optimized for heat transfer and structural applications.

A further embodiment of any of the foregoing embodiments may additionally and/or alternatively include the hollow lattice structure is formed as a strut that is located within an air stream.

A further embodiment of any of the foregoing embodiments may additionally and/or alternatively include the lattice structure supports a flow passage for the air stream as well as being configured with a heat transfer function configured to flow the first working fluid through internal passages of the hollow tubes formed within the lattice structure.

A further embodiment of any of the foregoing embodiments may additionally and/or alternatively include the internal passages comprise an inner diameter of not less than 100 microns in diameter.

A further embodiment of any of the foregoing embodiments may additionally and/or alternatively include the hollow lattice structure is selected from the group consisting of a fuel-oil cooler; a buffer heat exchanger with air-air in duct or fuel-air working fluids.

A further embodiment of any of the foregoing embodiments may additionally and/or alternatively include the hollow lattice structure is employed as a surface cooler on at least one of a nacelle and outside of a core case.

In accordance with the present disclosure, there is provided a lattice heat exchanger structural support for a gas turbine engine comprising a hollow lattice structure having hollow tubes configured to flow a first working fluid internally through the hollow tubes of the lattice structure, the hollow lattice structure comprising an open cell structure configured to flow a second working fluid through the lattice externally of the hollow tubes; a first gas turbine engine structure attached to the hollow lattice structure; and a second gas turbine engine structure attached to the hollow lattice structure, wherein the hollow lattice structure provides structural support to the first gas turbine engine structure and the second gas turbine engine structure.

Particular embodiments may include at least one, or a plurality of, the following optional features. These features may be provided separately from each other, or in combination with each other, unless specified otherwise.

A further embodiment of any of the foregoing embodiments may additionally and/or alternatively include the hollow lattice structure is co-optimized for heat transfer and structural applications within the gas turbine engine.

A further embodiment of any of the foregoing embodiments may additionally and/or alternatively include the hollow lattice structure is formed as a strut that is located within an air stream of the gas turbine engine.

A further embodiment of any of the foregoing embodiments may additionally and/or alternatively include the lattice structure supports a flow passage for the air stream as well as being configured with a heat transfer function configured to flow the first working fluid through internal passages of the hollow tubes formed within the lattice structure.

A further embodiment of any of the foregoing embodiments may additionally and/or alternatively include the hollow lattice structure is selected from the group consisting of a fuel-oil cooler; a buffer heat exchanger with air-air in duct or fuel-air working fluids.

A further embodiment of any of the foregoing embodiments may additionally and/or alternatively include the hollow lattice structure is employed as a surface cooler on at least one of a gas turbine engine nacelle and outside of a gas turbine engine core case.

In accordance with the present disclosure, there is provided a process for combined heat transfer and structural support comprising forming a hollow lattice structure having hollow tubes; flowing a first working fluid internally through the hollow tubes of the lattice structure, forming the hollow lattice structure comprising open cell structure; flowing a second working fluid through the hollow lattice structure externally of the hollow tubes; attaching a first structure to the hollow lattice structure; attaching a second structure to the hollow lattice structure; and providing structural support to the first structure and the second structure with the hollow lattice structure.

Particular embodiments may include at least one, or a plurality of, the following optional features. These features may be provided separately from each other, or in combination with each other, unless specified otherwise.

A further embodiment of any of the foregoing embodiments may additionally and/or alternatively include the process further comprising co-optimizing the hollow lattice structure for heat transfer and structural applications.

A further embodiment of any of the foregoing embodiments may additionally and/or alternatively include the process further comprising forming wherein the hollow lattice structure as a strut that is located within an air stream.

A further embodiment of any of the foregoing embodiments may additionally and/or alternatively include the process further comprising supporting a flow passage for the air stream with the lattice structure; configuring the lattice structure with a heat transfer function; and flowing the first working fluid through internal passages of the hollow tubes formed within the lattice structure.

A further embodiment of any of the foregoing embodiments may additionally and/or alternatively include the hollow lattice structure is selected from the group consisting of a fuel-oil cooler; a buffer heat exchanger with air-air in duct or fuel-air working fluids.

A further embodiment of any of the foregoing embodiments may additionally and/or alternatively include the process further comprising employing the hollow lattice structure as a surface cooler on at least one of a nacelle and outside of a core case.

A further embodiment of any of the foregoing embodiments may additionally and/or alternatively include the internal passages comprise an inner diameter of not less than 100 microns in diameter.

Other details of the lattice heat exchanger are set forth in the following detailed description and the accompanying drawings wherein like reference numerals depict like elements.

### BRIEF DESCRIPTION OF THE DRAWINGS

Fig. 1 is a cross section view of an exemplary gas turbine engine.
Fig. 2 is a schematic representation of exemplary lattice heat exchangers.
Fig. 3 is a schematic representation of an exemplary lattice heat exchanger.
Fig. 4 is an exemplary cross section of a gas turbine engine showing potential lattice heat exchanger locations.

### DETAILED DESCRIPTION

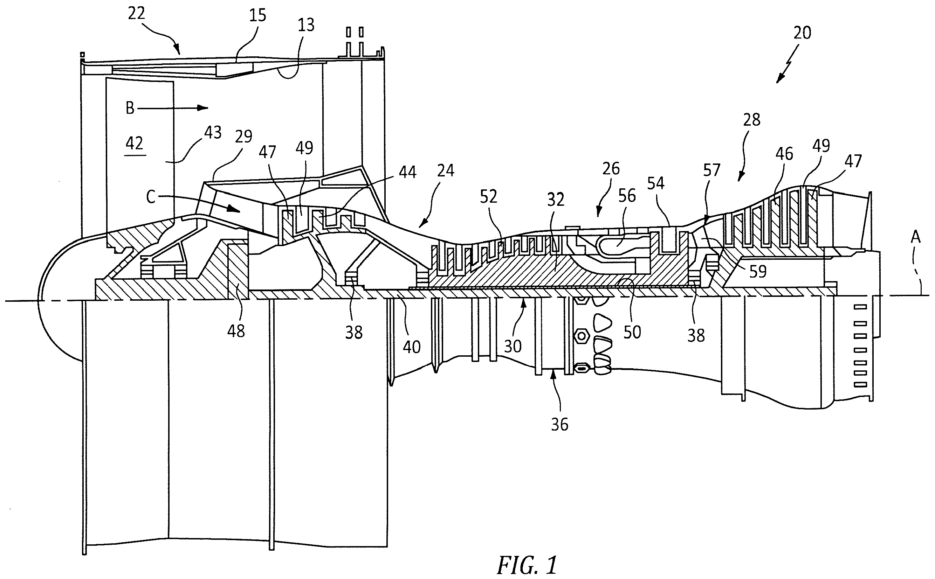

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of static vanes adjacent the rotatable airfoils. The rotatable airfoils and vanes are schematically indicated at 47 and 49.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of pounds-mass per hour lbm/hr of fuel flow rate being burned divided by pounds-force lbf of thrust the engine produces at that minimum point. The engine parameters described above, and those in the next paragraph are measured at this condition unless otherwise specified.

"Low fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The low fan pressure ratio is a spanwise average of the pressure ratios measured across the fan blade 43 alone over radial positions corresponding to the distance. The low fan pressure ratio can be less than or equal to 1.45, or more narrowly greater than or equal to 1.25, such as between 1.30 and 1.40. "Low corrected fan tip speed" is the actual fan tip speed in ft/sec divided by an industry standard temperature correction of [(Tram °R) / (518.7 °R)]^{0.5}. The "low corrected fan tip speed" can be less than or equal to 1150.0 ft / second (350.5 meters/second), and greater than or equal to 1000.0 ft / second (304.8 meters/second).

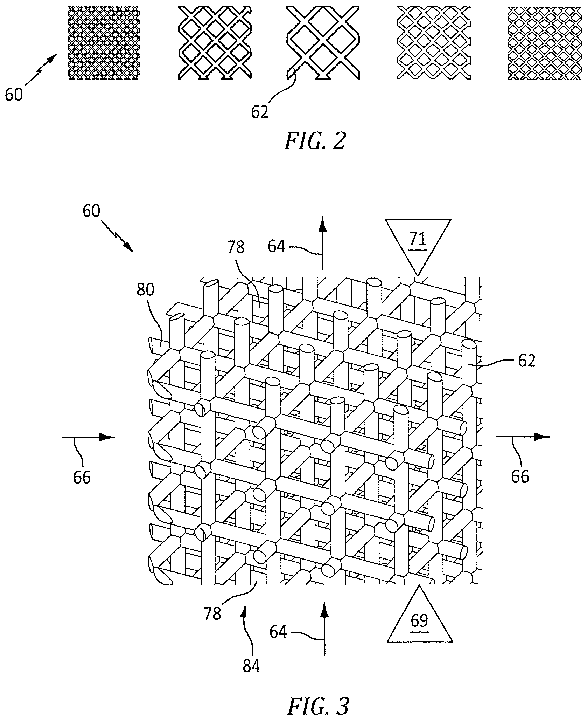

Referring to the Figs. 2 and 3 an exemplary lattice heat exchanger 60 design is shown. The lattice structure heat exchanger 60 can be manufactured by 3D print or otherwise fabricated to include hollow lattice structures 62 that allow for a working fluid 64 to flow internally through the lattice structure 62 as well as another working fluid 66 being able to flow externally through the lattice 62. Thus, one fluid 64 can flow within the structure 62 and another fluid 66 can flow outside the structure 62. The lattice structure 62 can be understood as a non-regular or non-repeating, gradation of the structure size across the flow path of heat exchanger 60. The lattice structure 62 also has the capacity to undergo an external load bearing function to withstand loads in any of compression, shear, tension and torsion.

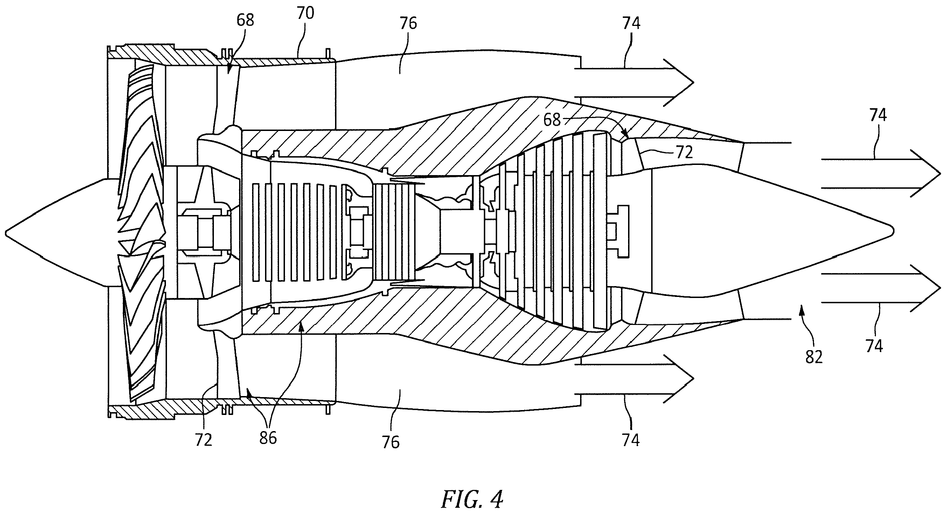

Referring also to Fig. 4, showing an exemplary cross section of a gas turbine engine showing potential lattice heat exchanger locations. The lattice structure 62 can be optimized for structural applications. So, for example, the lattice structure 62 can be formed to provide a structural support 68 between two architectures, such as a casing 70. As seen in Fig. 3, the hollow lattice structure 62 is attached to a first structure 69 and a second structure 71. The lattice structure 62 provides structural support to the first structure 69 and the second structure 71. The structural support includes external structural support to external loads.

The lattice structure 62 can also be co-optimized for heat transfer and structural applications. For example, the lattice structure 62 can be formed as a strut 72 that is located within an air stream 74. The lattice structure strut 72 can support a flow passage 76 for the air stream 74 as well as provide a heat transfer function by being configured to flow a working fluid 64 through the internal passages 78 formed within the lattice structure 62. The internal passages 78 can be small tubes, for example the size of hypodermic needles, as small as 100 microns in hydraulic diameter (ID) and less than 1 centimeter in hydraulic diameter. The tubes need not be circular in cross-section but can be co-optimized for load bearing, fluid flow and heat transfer.

Lattices 62 could be created in a variety of densities including lower densities (larger air-side pore size) for new applications such as supercritical CO2 waste heat recovery.

Additional considerations for utilizing the lattice structure 62 includes locations optimal for use in waste heat recovery. The lattice includes small diameter tubing 80 that can contain large pressure differentials, for example up to 6 thousand pounds per square inch. The lattice structure 62 includes the potential for use as a large low loss heat exchanger 82 located in a main gas path 74. An example of low loss can include less than 5% DP/P. In an exemplary embodiment, the heat exchanger 82 can be located proximate the nozzle of the main gas path or proximate the interstage compressor cooling gas path.

The lattice structure 62 can be employed as Hysiite or other hydrogen cycle heat exchanger, that are large with high air flow rates that requires a sparse, low-density heat exchanger. The core exhaust flow can be considered to be a high air flow region. An example of low-density can be a surface area per volume of heat exchanger. The lattice structure 62 can be employed as a fuel-oil cooler; a buffer heat exchanger with air-air in duct or fuel-air working fluids. The lattice structure 62 can be employed as an air cycle cooler or even an air-oil cooler.

The lattice structure 62 can be employed with two-phase refrigerant/coolant/hydrogen with multiple interconnected passages 84 that can handle flow maldistribution and instabilities better than unconnected parallel pathways. In another exemplary embodiment, the lattice structure 62 can be employed as surface coolers 86 on the nacelle or outside of the core case.

A technical advantage of the disclosed lattice heat exchanger includes performing both the transfer of thermal energy as well as providing structural support for the gas turbine engine.

There has been provided a lattice heat exchanger. While the lattice heat exchanger has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A lattice heat exchanger structural support comprising:
a hollow lattice structure having hollow tubes configured to flow a first working fluid internally through the lattice structure, the hollow lattice structure comprising open cell structure configured to flow a second working fluid through the lattice externally of the hollow tubes;
a first structure attached to the hollow lattice structure; and
a second structure attached to the hollow lattice structure, wherein the hollow lattice structure provides structural support to the first structure and the second structure.

2. The lattice heat exchanger structural support according to claim 1 or 2, wherein the hollow lattice structure is co-optimized for heat transfer and structural applications.

3. The lattice heat exchanger structural support according to claim 1, wherein the hollow lattice structure is formed as a strut that is located within an air stream.

4. The lattice heat exchanger structural support according to claim 3, wherein the lattice structure supports a flow passage for the air stream as well as being configured with a heat transfer function configured to flow the first working fluid through internal passages of the hollow tubes formed within the lattice structure.

5. The lattice heat exchanger structural support according to claim 3 or 4, wherein the internal passages comprise an inner diameter of not less than 100 microns in diameter.

6. The lattice heat exchanger structural support according to any one of claims 1 to 5, wherein the hollow lattice structure is selected from the group consisting of a fuel-oil cooler; a buffer heat exchanger with air-air in duct or fuel-air working fluids.

7. The lattice heat exchanger structural support according to any one of claims 1 to 6, wherein the hollow lattice structure is employed as a surface cooler on at least one of a nacelle and outside of a core case.

8. A lattice heat exchanger structural support for a gas turbine engine comprising:
a hollow lattice structure having hollow tubes configured to flow a first working fluid internally through the hollow tubes of the lattice structure, the hollow lattice structure comprising an open cell structure configured to flow a second working fluid through the lattice externally of the hollow tubes;
a first gas turbine engine structure attached to the hollow lattice structure; and
a second gas turbine engine structure attached to the hollow lattice structure, wherein the hollow lattice structure provides structural support to the first gas turbine engine structure and the second gas turbine engine structure.

9. The lattice heat exchanger structural support for a gas turbine engine according to claim 8, wherein the hollow lattice structure is co-optimized for heat transfer and structural applications within the gas turbine engine; and/or
wherein the hollow lattice structure is formed as a strut that is located within an air stream of the gas turbine engine; and/or
wherein the lattice structure supports a flow passage for the air stream as well as being configured with a heat transfer function configured to flow the first working fluid through internal passages of the hollow tubes formed within the lattice structure.

10. The lattice heat exchanger structural support for a gas turbine engine according to claim 8 or 9, wherein the hollow lattice structure is selected from the group consisting of a fuel-oil cooler; a buffer heat exchanger with air-air in duct or fuel-air working fluids; and/or
wherein the hollow lattice structure is employed as a surface cooler on at least one of a gas turbine engine nacelle and outside of a gas turbine engine core case.

11. A process for combined heat transfer and structural support comprising:
forming a hollow lattice structure having hollow tubes;
flowing a first working fluid internally through the hollow tubes of the lattice structure,
forming the hollow lattice structure comprising open cell structure;
flowing a second working fluid through the hollow lattice structure externally of the hollow tubes;
attaching a first structure to the hollow lattice structure;
attaching a second structure to the hollow lattice structure; and
providing structural support to the first structure and the second structure with the hollow lattice structure.

12. The process of claim 11, further comprising:
co-optimizing the hollow lattice structure for heat transfer and structural applications.

13. The process of claim 11 or 12, further comprising:
forming wherein the hollow lattice structure as a strut that is located within an air stream.

14. The process of any one of claims 11 to 13, further comprising:
supporting a flow passage for the air stream with the lattice structure;
configuring the lattice structure with a heat transfer function; and
flowing the first working fluid through internal passages of the hollow tubes formed within the lattice structure; and/or
wherein the hollow lattice structure is selected from the group consisting of a fuel-oil cooler; a buffer heat exchanger with air-air in duct or fuel-air working fluids.

15. The process of any one of claims 11 to 14, further comprising:
employing the hollow lattice structure as a surface cooler on at least one of a nacelle and outside of a core case; and/or
wherein the internal passages comprise an inner diameter of not less than 100 microns in diameter.
